(19) Europäisches Patentamt
European Patent Office
Office européen des brevets

(11) **EP 2 318 238 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(21) Anmeldenummer: **09779532.2**

(22) Anmeldetag: **25.05.2009**

(51) Int Cl.:
**B60R 21/013** (2006.01)   **B60R 21/0134** (2006.01)

(86) Internationale Anmeldenummer:
**PCT/EP2009/056296**

(87) Internationale Veröffentlichungsnummer:
**WO 2010/009920 (28.01.2010 Gazette 2010/04)**

(54) **VERFAHREN UND STEUERGERÄT ZUR ANSTEUERUNG VON PERSONENSCHUTZMITTELN FÜR EIN FAHRZEUG**

METHOD AND CONTROLLER FOR ACTUATING PERSONAL PROTECTION MEANS FOR A VEHICLE

PROCÉDÉ ET APPAREIL DE COMMANDE DESTINÉS À COMMANDER DES MOYENS DE PROTECTION DES PERSONNES POUR UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.07.2008   DE 102008040590**

(43) Veröffentlichungstag der Anmeldung:
**11.05.2011 Patentblatt 2011/19**

(73) Patentinhaber: **Robert Bosch GmbH**
**70442 Stuttgart (DE)**

(72) Erfinder:
• **TRINH, Hoang**
**70499 Stuttgart (DE)**
• **NITSCHKE, Werner**
**71679 Asperg (DE)**
• **LANG, Gunther**
**70563 Stuttgart (DE)**

(56) Entgegenhaltungen:
**DE-A1- 10 245 780**

**Beschreibung**

Stand der Technik

Die Erfindung betrifft ein Verfahren bzw. ein Steuergerät zur Ansteuerung von Personenschutzmitteln für ein Fahrzeug nach der Gattung der unabhängigen Patentansprüche.

Aus DE 102 45 780 A1 ist eine Vorrichtung zur Aufprallerkennung mittels Körperschall in einem Fahrzeug bekannt, die sich dadurch auszeichnet, dass die Vorrichtung mittels wenigstens eines Detektors Körperschall erzeugt, der zu wenigstens einem Schwingungssensor zur Aufprallerkennung übertragen wird. Das von diesen Detektoren charakteristische Körperschallsignal kann auch zur Beurteilung des Crashtyps dienen. Beispielsweise kann damit auf einen Crash mit einer deformierbaren Barriere oder einer nicht deformierbaren Barriere geschlossen werden.

Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, dass nunmehr die Crashtyperkennung an Hand des Körperschallsignals in einem vorgegebenen Zeitabschnitt bezüglich einer Amplitudenveränderung erfolgt. Dieser Erfindung liegt der Gedanke zugrunde, dass sich die verschiedenen Crashtypen bei einer, insbesondere bei einem Frontaufprall wie beispielsweise ein sogenannter AZT -Crashs, ein ODB-Crash und ein sogenannter Bumper-8-km/h-Crash hinsichtlich ihres Zeitverhaltens unterscheiden. Bei dem sogenannten AZT (Allianzzentrum für Technik) Crash handelt es sich um einen harten Crash, bei dem jedoch keine Ansteuerung von Personenschutzmitteln erfolgen soll. Bei dem AZT-Crash gibt es jedoch sehr große Signale, die beispielsweise größer sind als bei dem sogenannten ODB-Crash (Offset Deformable Barrier), bei dem eine Ansteuerung in Abhängigkeit von der Aufprallgeschwindigkeit sehr wohl erfolgen soll. Das vorgesehene Verfahren bzw. das vorgeschlagene Modul zur Crashtyperkennung stellt eine Zusatzfunktion zur Crashtyperkennung dar. Beim AZT-Crash werden die Frontstrukturelemente Querträger und Crashbox relativ früh, beispielsweise 10 bis 15 Millisekunden nach Aufprallbeginn deformiert, so dass dabei entsprechend große Signalamplituden entstehen. Nach kurzer Zeit fällt diese Amplitude stark ab. Dagegen wird beim ODB-Crash vorwiegend die Barriere aufgrund der steiferen Fahrzeugfrontstruktur deformiert, so dass Querträger, Crashbox und Längsträger in dieser frühen Phase wenig oder gar keine Deformation aufzeigen und erst in einer späteren Phase ca. 25 bis 40 Millisekunden nach Crashbeginn Deformationen stattfinden, die wiederum kleine Körperschallsignale erzeugen. Der Begriff Crashbeginn ist vorliegend der Kontaktzeitpunkt zwischen den Unfallgegnern. D. h. der relative Abfall von der maximalen Amplitude des Körperschallsignals beim AZT-Crash und beim ODB-Crash unterscheidet sich sehr stark voneinander, so dass dieses Merkmal erfindungsgemäß zur Crashtypunterscheidung herangezogen wird. Im Falle von einem AZT-Crash wird die Crashenergie vollständig durch die Deformation der Querträger und der Crashbox aufgebracht, so dass der entstandene Körperschall nach einem starken Aufbau sehr schnell wieder abklingt.

Die Ansteuerung der Personenschutzmittel wie Airbags, Gurtstraffer, crashaktive Kopfstützen, Sitzelemente usw. bedeutet die Aktivierung dieser Personenschutzmittel.

Das wenigstens eine Körperschallsignal wird von einer Körperschallsensorik ausgegeben und zwar in Abhängigkeit vom erfassten Körperschall. Dafür können beispielsweise mikromechanisch hergestellte Beschleunigungssensoren verwendet werden, die auch in der Lage sind den Körperschall, der beispielsweise zwischen einem und 50 Kilohertz liegt, zu erfassen. Bei dem Körperschall handelt es sich um die hochfrequenten Schwingungen der Fahrzeugstruktur. Körperschall wird erzeugt, indem die Fahrzeugstruktur eine Einwirkung plastisch oder elastisch erfährt. Anstatt von Beschleunigungssensoren können auch andere Sensoren wie Klopfsensoren zur Körperschallerfassung verwendet werden.

Bei dem Crashtyp handelt es sich um die verschiedenen Aufprallarten wie beispielsweise Front, Seite, Winkel oder Heckaufprall aber auch um vorgegebene Crashtypen wie den oben angesprochenen AZT-Crash oder ODB-Crash. Die Erkennung dieser Crashtypen ist entscheidend für die sinnvolle Ansteuerung der Personenschutzmittel. Insbesondere kann an Hand des Crashtyps auch die Verarbeitung von Unfallsensorsignalen zur Bestimmung der Crashschwere beeinflusst werden. Die Crashschwere legt fest wie stark und wie viel und welche Personenschutzmittel anzusteuern sind.

Der vorgegebene Zeitabschnitt ist in den abhängigen Ansprüchen näher definiert. Der Zeitabschnitt beginnt ab einem charakteristischen Signalpunkt, der durch den Signalverlauf eines beispielsweise vom Körperschallsignal abgeleiteten Signals bestimmt wird. Der Zeitabschnitt kann aber auch an einem vorgegebenen Zeitpunkt beginnen, wobei das Ende ebenso durch ein Signalmerkmal oder eine Vorgabe bestimmt werden kann.

Die Amplitudenänderung ist im vorgegebenen Zeitabschnitt, wie oben angegeben, eine Veränderung der Amplitude eines vom Körperschallsignal abgeleiteten Signals. Oben wurde bereits ausgeführt, dass sich die unterschiedlichen Crashtypen insbesondere hinsichtlich des Abfalls der Amplitude stark und eindeutig unterscheiden.

Ein Steuergerät ist vorliegend ein elektrisches Gerät, das Sensorsignale wie das Körperschallsignal verarbeitet und in Abhängigkeit von dem Verarbeitungsergebnis die Ansteuerung der Personenschutzmittel bewirkt.

Die Schnittstelle kann dabei hard- und/oder softwaremäßig ausgebildet sein. Insbesondere kann die Schnittstelle derart ausgebildet sein, dass mehrere Körperschallsignale bereitgestellt werden. Bei einer hardwaremäßigen Ausprägung ist es möglich, dass die Schnittstelle Teil eines sogenannten System-ASICs sein kann. Sie kann jedoch auch als eigener integrierter Schaltkreis oder aus diskreten Bauelementen oder Kombinationen davon hergestellt sein. Bei einer softwaremäßigen Ausbildung ist insbesondere die Schnittstelle als Softwaremodul auf einem Prozessor möglich. Vorliegend kommt hier insbesondere die Ausbildung als Softwaremodul auf einem Mikrocontroller in Frage.

Bei der Auswerteschaltung handelt es sich üblicher Weise um einen Prozessor mit einem oder mehreren Rechnerkernen. Als Prozessortyp kommt insbesondere ein Mikrocontroller in Frage. Anstatt eines Prozessors kann jedoch auch ein ASIC oder eine andere Schaltung, die nicht softwarebasiert arbeitet, vorgesehen sein.

Auch das Crashtypbestimmungsmodul, das Ansteuermodul sowie das Analysemodul können entsprechend hard- und/oder softwaremäßig ausgebildet sein.

Die Ansteuerschaltung kann ebenfalls Teil des oben genannten System-ASICs sein. Die Ansteuerschaltung weist eine entsprechende Logik zur Verarbeitung des Ansteuersignals auf, das angibt ob, wann und welche Personenschutzmittel anzusteuern sind. Weitere Komponenten der Ansteuerschaltung sind beispielsweise elektrisch steuerbare Leistungsschalter, um die entsprechende Ansteuerungsenergie zu den Personenschutzmitteln zu schalten.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Steuergeräts zur Ansteuerung von Personenschutzmitteln möglich.

Es ist dabei vorteilhaft, dass in Abhängigkeit von der Amplitudenänderung ein Arbeitssignal bestimmt wird und dieses Arbeitssignal wird mit wenigstens einer ersten Schwelle für die Crashtyperkennung verglichen, wobei in Abhängigkeit von diesem Vergleich eine Flagge gesetzt wird. Diese Flagge zeigt dann an, ob ein bestimmter Crashtyp erkannt wurde. Dieses Arbeitssignal dient zur Bestimmung des Crashtyps über den Schwellwertvergleich mit der ersten Schwelle. Dabei können insbesondere zwei Schwellen verwendet werden, um festzustellen, ob das Arbeitssignal in einem bestimmten Zeitabschnitt zwischen diesen beiden Schwellen liegt. Dies ist insbesondere für die Identifizierung des sogenannten ODB-Crashs von Nutzen. Vorliegend wird im Steuergerät dies durch das Analysemodul durchgeführt, das Teil des Crashbestimmungsmoduls ist. Das Analysemodul weist einen Schwellwertentscheider auf, der die wenigstens eine Schwelle mit dem Arbeitssignal vergleicht. Abhängig davon wird die Flagge gesetzt um damit die Crashtyperkennung zu signalisieren. Das Setzen der Flagge wird durch das Crashtyperkennungsmodul letztlich durchgeführt.

Darüber hinaus ist es vorteilhaft, dass in Abhängigkeit von einem Zustand dieser Flagge eine Ansteuerungskennlinie in einem Hauptalgorithmus gesetzt wird. Dieser Hauptalgorithmus, der Unfallsensorsignale wie beispielsweise Beschleunigungssignale verarbeitet, verwendet wenigstens eine Ansteuerungskennlinie um an Hand eines Kennlinienvergleichs mit den verarbeitenden Signalen festzustellen, ob die Ansteuerung der Personenschutzmittel erfolgen soll oder nicht. Die Crashtyperkennung nimmt Einfluss auf diese Ansteuerungskennlinie, indem diese beispielsweise um ein Offset verändert wird. Bei dem Hauptalgorithmus handelt es sich um einen Ansteuerungsalgorithmus, wie er aus dem Stand der Technik bekannt ist. Dabei kann die Kennlinie, die zur Beurteilung der Ansteuerung dient, in einem Diagramm vorgesehen sein, wobei auf der Abszisse der Geschwindigkeitsabbau und auf der Ordinate die Beschleunigung vorgesehen seien. Aber auch ein zeitbasierter Hauptalgorithmus kann vorgesehen sein, wobei für den Geschwindigkeitsabbau dabei die Ansteuerungskennlinie auch zeitabhängig beeinflusst wird. Diese Ansteuerungskennlinie kann weiterhin auch in Abhängigkeit von den Unfallsensorsignalen selbst verändert werden.

Des Weiteren ist es vorteilhaft, dass die Crashtyperkennung nur dann durchgeführt wird, wenn ein vorverarbeitetes Körperschallsignal eine vorgegebene zweite Schwelle überschritten hat. Damit wird die Crashtyperkennung abgesichert, indem überprüft wird, ob das Körperschallsignal oder beispielsweise das integrierte Körperschallsignal über einer Minimalschwelle liegt. Es kann auch festgestellt werden, ob das Körperschallsignal unterhalb einer vorgegebenen Schwelle liegt um abzusichern, dass das Körperschallsignal nicht viel zu groß ist.

Alternativ oder zusätzlich kann diese Absicherung auch über ein vom Beschleunigungssignal abgeleiteten Signal erfolgen. Auch dies kann dann durch den Schwellwertvergleich ausgeführt werden. Das abgeleitete Signal ist das Beschleunigungssignal selbst, ein gefiltertes Beschleunigungssignal, ein einfach oder zweifach integriertes Beschleunigungssignal oder anderweitig verarbeitet.

Das Arbeitssignal wird vorteilhafter Weise dadurch erzeugt, dass eine Fläche im Zeitabschnitt zwischen einem vom Körperschallsignal abgeleiteten Signal und einer vierten Schwelle bestimmt wird. Diese vierte Schwelle wird durch das vom Körperschallsignal abgeleitete Signal selbst bestimmt, indem das Maximum dieses Signals genommen wird und dann als Schwelle fortgeschrieben wird. Der Zeitabschnitt wird nämlich dadurch bestimmt, dass er zwischen dem Auftreten dieses Maximums und einem vorgegebenen späteren Zeitpunkt festgelegt wird. Dieser vorgegebene spätere Zeitpunkt wird durch eine Zeit vorgegeben, die ab Erreichen des Maximums verstrichen sein muss. D. h. wenn das Maximum erreicht wird, wird ein Zähler gestartet und wenn dieser Zähler einen vorbestimmten Wert erreicht, ist der Zeitabschnitt beendet.

Weiterhin ist es vorteilhaft, dass als vom Körperschallsignal abgeleitetes Signal das Körperschallsignal selbst oder ein gefiltertes Körperschallsignal oder ein integriertes Körperschallsignal verwendet wird. Dabei kann das integrierte Körperschallsignal insbesondere ein Fensterintegral sein.

Ausführungsbeispiele der Erfindung sind in der Zeichnung dargestellt und werden in der nachfolgenden Beschreibung näher erläutert.

Es zeigen:

Fig. 1    ein Blockschaltbild des erfindungsgemäßen Steuergeräts im Fahrzeug mit angeschlossenen Komponenten,

Fig. 2    ein Signalflussdiagramm,

Fig. 3    ein Körperschallsignalzeitdiagramm,

Fig. 4    ein weiteres Körperschallsignalzeitdiagramm und

Fig. 5    ein Arbeitssignalzeitdiagramm sowie

Fig. 6    ein Flussdiagramm des erfindungsgemäßen Verfahrens.

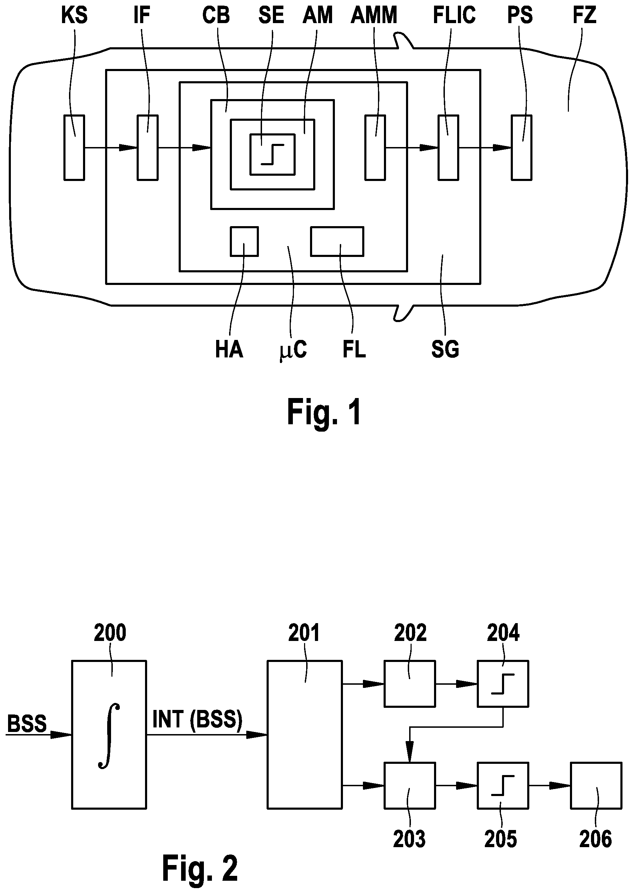

Fig. 1 zeigt in einem Blockschaltbild das erfindungsgemäße Steuergerät SG mit angeschlossenen Komponenten der Körperschallsensorik KS und den Personenschutzmitteln PS im Fahrzeug FZ.

Vorliegend sind nur die für die das Verständnis der Erfindung notwendigen Komponenten dargestellt. Weitere für den Betrieb des Steuergeräts erforderliche Komponenten sind der Einfachheit halber weggelassen worden, sofern sie nicht zum Verständnis der Erfindung beitragen.

Die Körperschallsensorik KS ist vorliegend außerhalb des Steuergeräts SG und damit des Gehäuses des Steuergeräts SG angeordnet. Die Körperschallsensorik KS kann dabei beispielsweise in einem Sensorsteuergerät angeordnet sein. Die Körperschallsensorik kann jedoch auch in einem eigenen Gehäuse im Fahrzeug eingebaut sein. Es ist alternativ auch möglich, dass die Körperschallsensorik auch innerhalb des Steuergeräts SG angeordnet ist. Insbesondere kann es vorgesehen sein, dass mehrere Körperschallsensoren erfindungsgemäß verwendet werden.

Die Körperschallsensorik KS ist üblicher Weise eine Beschleunigungssensorik, bei der das hochfrequente Signal ausgewertet wird. Hochfrequent heißt vorliegend ein bis 50 Kilohertz. Es kann auch noch darüber eine Signalverarbeitung erfolgen. Diese Beschleunigungssensorik ist üblicher Weise mikromechanisch hergestellt, wobei der Beschleunigungssensorik noch eine Vorverarbeitung zugeordnet ist, die beispielsweise eine Messsignalverstärkung, eine Analogdigitalwandlung und ggf. noch eine Filterung.

Die Signale werden von der Körperschallsensorik KS digital zum Steuergerät SG und dort zur Schnittstelle IF übertragen. Die Schnittstelle ist vorliegend Teil eines System-ASICs, der als integrierter Schaltkreis ausgebildet ist. Die Aufgabe der Schnittstelle IF ist es, die Nutzdaten von der Körperschallsensorik KS mit in die Sensordaten vom Übertragungsformat in ein für den Mikrocontroller μC als der Auswerteschaltung verständliches Übertragungsformat umzusetzen. Auch eine Signalverstärkung usw. kann in der Schnittstelle IF vorgesehen sein.

Der Mikrocontroller μC verarbeitet dann diese Körperschallsignale mit dem Crashtypbestimmungsmodul CB. Dabei verwendet das Crashtypbestimmungsmodul, vorliegend als Softwaremodul wie auch alle anderen Module ausgeführt, ein Analysemodul AM zur Analyse der Amplitudenänderung des vom Körperschallsignal abgeleiteten Signals. Diese Ableitung kann im Mikrocontroller μC selbst erfolgen. Sie kann jedoch auch schon bereits vorher beispielsweise durch die Körperschallsensorik KS erfolgen. Vorliegend wird als Ableitung das integrierte Körperschallsignal, insbesondere ein Fensterintegral verwendet. Dieses integrierte Körperschallsignal wird im Analysemodul AM auf die Amplitudenänderung hin untersucht. Dazu wird insbesondere die Fläche zwischen dem integrierten Beschleunigungssignal und einer Schwelle ausgerechnet, wobei die Schwelle durch das Maximum des Körperschallsignals bestimmt wird. Das Maximum wird beispielsweise dadurch erkannt, dass immer ein Wert als Maximum festgelegt wird, bis er durch einen neuen Wert ersetzt wird. Dies wird bis zu einer bestimmten Zeit durchgeführt, zu der dann die Crashtypanalyse einsetzen muss. Die Fläche zwischen dem integrierten Beschleunigungssignal und dieser Schwelle wird dann über den vorgegebenen Zeitabschnitt, beispielsweise durch Aufsummation bestimmt. Der vorgegebene Zeitabschnitt ist vorliegend so festgelegt, dass er mit dem Zeitpunkt des Maximums beginnt und dann ein Zähler gezählt wird, der bis zu einem vorgegebenen Wert zählt und dann der Zeitabschnitt endet. Ein Beispiel dafür sind dann 35ms, wobei das Maximum bei 5ms ab Kontaktzeitpunkt mit dem Unfallgegner erkannt wurde. Anstatt dem Kontaktzeitpunkt kann als Crashbeginn auch das Überschreiten einer Rauschschwelle oder das Zurückrechnen mittels einer Interpolation definiert sein.

Diese Fläche symbolisiert demnach die Amplitudenveränderung im vorgegebenen Zeitabschnitt. Damit liegt ein Arbeitssignal vor, das der Schwellwertentscheider SE mit wenigstens einem Schwellwert vergleicht. Das Ausgangssignal dieses Schwellwententscheiders SE legt dann fest, welche Flagge FL durch das Crashtypbestimmungsmodul CB gesetzt wird. Anhand von dieser Flagge beeinflusst dann der Hauptalgorithmus HA seine Ansteuerungskennlinie. Anhand der Verarbeitung des Hauptalgorithmus HA wird dann das Ansteuersignal durch das Ansteuermodul AMM erzeugt und an die Ansteuerungsschaltung FLIC übertragen.

Die Ansteuerungsschaltung FLIC wertet das Ansteuersignal aus und steuert in Abhängigkeit davon entsprechende elektrische Leistungsschalter wie MOSFETs an, um den entsprechenden Personenschutzmitteln die Ansteuerungsenergie zuzuführen.

Figur 2 zeigt in einem Signalablaufdiagramm, wie das erfindungsgemäße Verfahren in einem Ausführungsbeispiel ablaufen kann. Das Körperschallsignal BSS wird in einem Integrator 200, der auch als Fensterintegrator ausgebildet sein kann, zum integrierten Beschleunigungssignal INT (BSS) gebildet. Im Block 201 wird das Maximum in einer bestimmten Zeit dieses Integrals gesucht. Ist das Maximum gefunden, dann startet ein Zähler 202 bis zu einem vorgegebenen Wert 204. Parallel dazu wird im Block 203 die Fläche zwischen einem Schwellwert, der durch das Maximum festgelegt ist und dem integrierten Beschleunigungssignal im Zeitverlauf INT (BSS) selbst bestimmt. Ist der Zähler bis zum Schwellwert gekommen, dann wird die Flächenberechnung 203 beendet.

Der Wert für die Fläche geht dann in den Schwellwertentscheider 205 ein, der diesen Wert mit einem vorgegebenen Schwellwert vergleicht. Entsprechend diesem Vergleich wird die Flagge 206 gesetzt, um beispielsweise einen AZT-oder ODB-Crash anzuzeigen. Anstatt der Fläche können jedoch auch andere Parameter bestimmt werden, um die Amplitudenänderung im vorgegebenen Zeitabschnitt zu bestimmen.

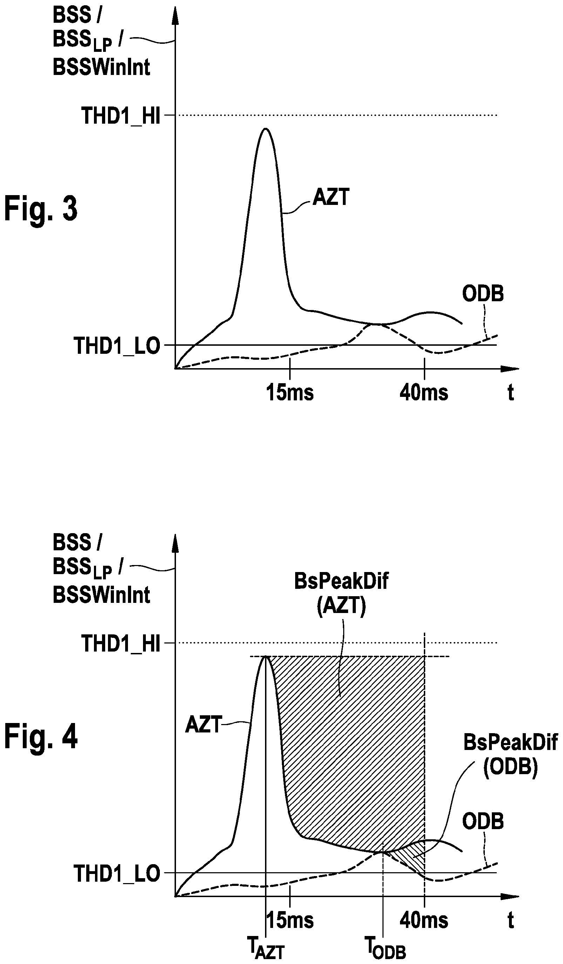

Figur 3 zeigt in einem integrierten Beschleunigungssignalzeitdiagramm einen typischen Verlauf für einen AZT-Crash durch die durchgezogene Linie und einen typischen Verlauf für einen ODB-Crash, der durch die gestrichelte Linie symbolisiert ist. Vorliegend sind zwei Schwellwerte, und zwar THD1_LO und THD1_HI festgelegt. Der untere Schwellwert THD1_LO muss mindestens durch das Signal überschritten werden, damit überhaupt die Crashtyperkennung einsetzt. Der obere Schwellwert THD1_HI muss unterschritten bleiben, denn ansonsten ist die Crashschwere so groß, dass eine Crashtyperkennung keinen Sinn mehr macht.

Deutlich ist zu sehen, dass der AZT-Crash zunächst eine sehr hohe Amplitude hat, und dann abfällt, aber immer noch über der Höhe des sogenannten ODB-Crashs liegt. Dies ist besonders kritisch, da der AZT-Crash üblicherweise kein Auslösecrash ist, während der ODB-Crash ein Auslösecrash sein kann.

Figur 4 zeigt in einem weiteren integrierten Körperschall-Zeitdiagramm den gleichen zeitlichen Verlauf wiederum mit dem Schwellwert THD1_LO und dem AZT-Signal durchgezogen und dem ODB-Signal gestrichelt. Neu hinzugekommen ist die Fläche, die ab dem Erreichen des Maximums $T_{AZT}$ und einer zeitlichen Grenze 40ms, die durch einen Zähler festgelegt wird, sowie $T_{ODB}$ bis zu den 40ms. In diesen Zeitabschnitten wird die Fläche zwischen dem Signal, beispielsweise die durchgezogene Linie und der Schwelle, die durch das Maximum des Signals festgelegt ist, berechnet. Diese Fläche ist vorliegend mit BsPeakDif (AZT) bzw. BsPeakDif (ODB) festgelegt und wird durch die folgende Gleichung beschrieben:

$$BsPeakDif = \sum_{i=1}^{k} (\max(x(1:k)) - x(k)$$

Man erkennt, dass BsPeakDif (AZT) als Arbeitssignal wesentlich größer ist als BsPeakDif (ODB). Das Arbeitssignal BsPeakDif wird nur berechnet, wenn das Körperschallsignal oder das integrierte Körperschallsignal die Schwelle THD1_LO überschreitet und eine entsprechende Flagge dann gesetzt ist.

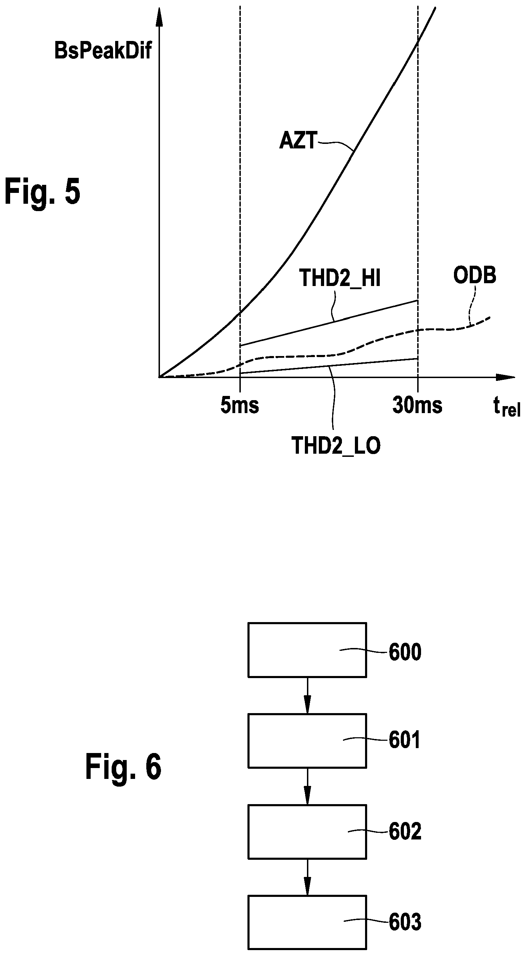

In Figur 5 wird nun der Vergleich dieses Arbeitssignals mit Schwellwerten durchgeführt. Dabei ist ein Entscheidungsfenster von 5 bis 30ms auf der Zeitachse festgelegt. Zwei Schwellwerte, THD2_LO und THD2_HI dienen zur Identifizierung. Das Arbeitssignal BsPeakDif (AZT) ist viel größer als beide Schwellen im vorgegebenen Zeitabschnitt, während das Arbeitssignal des ODB-Crashs wiederum gestrichelt dargestellt genau zwischen diesen beiden Schwellwerten liegt und damit die Identifikation des ODB-Crashs erfolgreich durchgeführt wurde.

Vergleicht man das Arbeitssignal BsPeakDif mit den Schwellen THD_HI und THD_LO, die dem Bereich der Kennlinienveränderung für die Ansteuerkennlinie im Hauptalgorithmus kennzeichnet, so erhält man eine entsprechende Flagge. Ist die Flagge bei einem ODB40-Crash also gesetzt, kann durch Parametrisierung der Ansteuerkennlinie, die im Prinzip eine Einhüllende über Nichtauslösefälle darstellt, entsprechend abgesenkt werden, so dass eine frühzeitige Auslösung ermöglicht wird.

Wie oben dargestellt, um gegenüber Nichtauslösefälle unempfindlich zu sein, werden zusätzlich absichernde Bedingungen abgefragt: BSS (ODB) >THD1 und/oder kombiniert mit niederfrequenten Werten der Beschleunigung und des Geschwindigkeitsabbaus: A>THD3 und DV>THD4.

Die obere Grenze THD2_HI wird als obere Grenze gesetzt, damit kein Nofire-Crash, beispielsweise Bumper 8K durch eine z. B. höhere Geschwindigkeit versehentlich ein Absenken der Ansteuerkennlinie bewirkt und so eine Fehlauslösung ermöglichen würde.

Figur 6 zeigt ein Flussdiagramm des erfindungsgemäßen Verfahrens. In Verfahrensschritt 600 wird mindestens ein Körperschallsignal bereitgestellt. In Verfahrensschritt 601 erfolgt die Auswertung dahingehend, ob eine Amplitudenveränderung in einem vorgegebenen Zeitabschnitt vorliegt, um dann in Verfahrensschritt 602 in Abhängigkeit davon den Crashtyp zu bestimmen. In Verfahrensschritt 603 erfolgt dann die Ansteuerung in Abhängigkeit von diesem Crashtyp.

## Patentansprüche

1. Verfahren zur Ansteuerung von Personenschutzmitteln (PS) für ein Fahrzeug (FZ), wobei anhand wenigstens eines Körperschallsignals ein Crashtyp erkannt wird und die Ansteuerung in Abhängigkeit vom Crashtyp erfolgt, **dadurch gekennzeichnet, dass** für die Crashtyperkennung das Körperschallsignal in einem vorgegebenen Zeitabschnitt bezüglich einer Amplitudenänderung ausgewertet wird.

2. Verfahren nach Anspruch 1, **dadurch gekennzeichnet, dass** in Abhängigkeit von der Amplitudenveränderung ein Arbeitssignal bestimmt wird und dieses Arbeitssignal mit wenigstens einer ersten Schwelle für die Crashtyperkennung verglichen wird, wobei in Abhängigkeit von diesem Vergleich eine Flagge gesetzt wird.

3. Verfahren nach Anspruch 2, **dadurch gekennzeichnet, dass** in Abhängigkeit von einem Zustand der Flagge eine Ansteuerungskennlinie in einem Hauptalgorithmus (HA) gesetzt wird.

4. Verfahren nach einem der vorhergehenden Ansprüche, **dadurch gekennzeichnet, dass** die Crashtyperkennung nur dann durchgeführt wird, wenn ein vorverarbeitetes Körperschallsignal eine vorgegebene zweite Schwelle überschritten hat.

5. Verfahren nach einem der vorhergehenden Ansprüche, **dadurch gekennzeichnet, dass** die Crashtyperkennung nur dann durchgeführt wird, wenn wenigstens ein von einem Beschleunigungssignal abgeleiteten ersten Signal wenigstens eine dritte Schwelle überschritten hat.

6. Verfahren nach einem der Ansprüche 2 bis 5, **dadurch gekennzeichnet, dass** das Arbeitssignal dadurch erzeugt wird, dass eine Fläche im Zeitabschnitt zwischen einem vom Körperschallsignal abgeleiteten zweiten Signal und einer vierten Schwelle bestimmt wird, wobei die vierte Schwelle ein Maximum des zweiten Signals ist und der Zeitabschnitt zwischen dem Erreichen des Maximums und einem vorgegebenen späteren Zeitpunkt festgelegt wird.

7. Verfahren nach Anspruch 6, **dadurch gekennzeichnet, dass** das zweite Signal das Körperschallsignal oder das gefilterte Körperschallsignal oder das integrierte Körperschallsignal ist.

8. Verfahren nach Anspruch 7, **dadurch gekennzeichnet, dass** das integrierte Körperschallsignal ein Fensterintegral ist.

9. Steuergerät (SG) zur Ansteuerung von Personenschutzmitteln (PS) für ein Fahrzeug (FZ) mit:

- einer Schnittstelle (IF) zur Bereitstellung wenigstens eines Körperschallsignals,
- einer Auswerteschaltung (µc) mit einem Crashtypbestimmungsmodul (CB) in Abhängigkeit von wenigstens einem Körperschallsignal und mit einem Ansteuermodul (ANM) zur Erzeugung eines Ansteuersignals in Abhängigkeit von dem Crashtyp,
- einer Ansteuerschaltung (FLIC) zur Ansteuerung der Personenschutzmittel (PS) in Abhängigkeit vom Ansteuersignal, **dadurch gekennzeichnet, dass** das Crashtypbestimmungsmodul (CB) für die Crashtyperkennung ein Analysemodul (AM) zur Auswertung einer Amplitudenänderung in einem vorgegebenen Zeitabschnitt aufweist.

10. Steuergerät nach Anspruch 9, **dadurch gekennzeichnet, dass** das Analysemodul (AM) einen Schwellwertentscheider (SE) aufweist, der einen in Abhängigkeit von der Amplitudenänderung bestimmtes Arbeitssignal mit wenigstens einer ersten Schwelle für die Crashtyperkennung vergleicht, wobei das Crashtyperkennungsmodul (CB) in Abhängigkeit von dem Vergleich eine Flagge (FL) setzt.

## Claims

1. Method for actuating personal protection means (PS) for a vehicle (FZ), wherein a crash type is identified on the basis of at least one structure-borne sound signal and the actuation is carried out on the basis of the crash type, **characterized in that**, for the crash type identification, the structure-borne sound signal is evaluated with respect to an amplitude change in a predefined time period.

2. Method according to Claim 1, **characterized in that** an operating signal is determined on the basis of the amplitude change and this operating signal is compared with at least one first threshold for the crash type identification, wherein a flag is set on the basis of this comparison.

3. Method according to Claim 2, **characterized in that** an actuation characteristic curve is set in a main algorithm (HA) on the basis of a state of the flag.

4. Method according to one of the preceding claims, **characterized in that** the crash type identification is carried out only when a preprocessed structure-borne sound signal has exceeded a predefined second threshold.

5. Method according to one of the preceding claims, **characterized in that** the crash type identification is carried out only when at least one first signal derived from an acceleration signal has exceeded at least one third threshold.

6.  Method according to one of Claims 2 to 5, **characterized in that** the operating signal is generated by determining an area between a second signal derived from the structure-borne sound signal and a fourth threshold in the time period, wherein the fourth threshold is a maximum of the second signal and the time period between reaching the maximum and a predefined later time is determined.

7.  Method according to Claim 6, **characterized in that** the second signal is the structure-borne sound signal or the filtered structure-borne sound signal or the integrated structure-borne sound signal.

8.  Method according to Claim 7, **characterized in that** the integrated structure-borne sound signal is a window integral.

9.  Control device (SG) for actuating personal protection means (PS) for a vehicle (FZ), having:

    - an interface (IF) for providing at least one structure-borne sound signal,
    - an evaluation circuit (μc) having a crash type determination module (CB) on the basis of at least one structure-borne sound signal and having an actuation module (ANM) for generating an actuation signal on the basis of the crash type,
    - an actuation circuit (FLIC) for actuating the personal protection means (PS) on the basis of the actuation signal, **characterized in that** the crash type determination module (CB) has an analysis module (AM) for evaluating an amplitude change in a predetermined time period for the crash type identification.

10. Control device according to Claim 9, **characterized in that** the analysis module (AM) has a threshold value decision-making unit (SE) which compares an operating signal determined on the basis of the amplitude change with at least one first threshold for the crash type identification, wherein the crash type identification module (CB) sets a flag (FL) on the basis of the comparison.

**Revendications**

1.  Procédé destiné à commander des moyens de protection des personnes (PS) pour un véhicule (FZ), dans lequel un type de collision est détecté à partir d'au moins un signal de bruit de structure et la commande s'effectue en fonction du type de collision, **caractérisé en ce que**, pour la détection du type de collision, le signal de bruit de structure est évalué au cours d'une période de temps prédéterminée par rapport à une variation d'amplitude.

2.  Procédé selon la revendication 1, **caractérisé en ce qu'**un signal de travail est déterminé en fonction de la variation d'amplitude et **en ce que** ce signal de travail est comparé à au moins un premier seuil pour la détection du type de collision, dans lequel un indicateur est défini en fonction de cette comparaison.

3.  Procédé selon la revendication 2, **caractérisé en ce qu'**une courbe caractéristique de commande est définie dans un algorithme principal (HA) en fonction d'un état de l'indicateur.

4.  Procédé selon l'une des revendications précédentes, **caractérisé en ce que** la détection du type de collision n'est effectuée que si un signal de bruit de structure prétraité a dépassé un deuxième seuil prédéterminé.

5.  Procédé selon l'une des revendications précédentes, **caractérisé en ce que** la détection du type de collision n'est effectuée que si au moins un premier signal dérivé d'un signal d'accélération a dépassé au moins un troisième seuil.

6.  Procédé selon l'une des revendications 2 à 5, **caractérisé en ce que** le signal de travail est généré par détermination d'une aire au cours de la période de temps comprise entre un deuxième signal dérivé du signal de bruit de structure et un quatrième seuil, dans lequel le quatrième seuil est un maximum du deuxième signal et la période de temps est fixée entre le moment où le maximum est atteint et un instant ultérieur prédéterminé.

7.  Procédé selon la revendication 6, **caractérisé en ce que** le deuxième signal est le signal de bruit de structure ou le signal de bruit de structure filtré ou le signal de bruit de structure intégré.

8.  Procédé selon la revendication 7, **caractérisé en ce que** le signal de bruit de structure intégré est un signal de fenêtre.

9.  Appareil de commande (SG) destiné à commander des moyens de protection des personnes (PS) pour un véhicule, comportant :

    - une interface (IF) destinée à fournir au moins un signal de bruit de structure,
    - un circuit d'évaluation (μc) comprenant un module de détermination de type de collision (CB) en fonction d'au moins un signal de bruit de structure et un module de commande (ANM) destiné à générer un signal de commande en fonction du type de collision,
- un circuit de commande (FLIC) destiné à commander les moyens de protection des personnes (PS) en fonction du signal de commande, **caractérisé en ce que** le module de détermination de type de collision (CB) comporte, pour détecter le type de collision, un module d'analyse (AM) destiné à évaluer une variation d'amplitude au cours d'une période de temps prédéterminée.

10. Appareil de commande selon la revendication 9, **caractérisé en ce que** le module d'analyse (AM) comprend un sélecteur de valeur de seuil (SE) qui compare un signal de travail déterminé en fonction de la variation d'amplitude à au moins un premier seuil pour détecter le type de collision, dans lequel le module de détection de type de collision (CB) définit un indicateur (FL) en fonction de la comparaison.

**Fig. 1**

**Fig. 2**

**Fig. 3**

BSS /
BSS$_{LP}$ /
BSSWinInt

THD1_HI

AZT

ODB

THD1_LO

15ms          40ms          t

**Fig. 4**

BSS /
BSS$_{LP}$ /
BSSWinInt

THD1_HI

BsPeakDif
(AZT)

AZT

BsPeakDif
(ODB)

ODB

THD1_LO

15ms          40ms          t

$T_{AZT}$          $T_{ODB}$

# Fig. 5

BsPeakDif

AZT

THD2_HI

ODB

5ms

30ms

$t_{rel}$

THD2_LO

# Fig. 6

600

601

602

603

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10245780 A1